(19) **Europäisches Patentamt European Patent Office Office européen des brevets**

(11) **EP 3 757 578 B1**

(12) **FASCICULE DE BREVET EUROPEEN**

(45) Date de publication et mention de la délivrance du brevet:
**07.09.2022 Bulletin 2022/36**

(21) Numéro de dépôt: **20182362.2**

(22) Date de dépôt: **25.06.2020**

(51) Classification Internationale des Brevets (IPC):
**G01P 5/24** *(2006.01)* **G01F 1/66** *(2022.01)*

(52) Classification Coopérative des Brevets (CPC):
**G01F 1/66; G01P 5/245**

(54) **PROCEDE DE MESURE DE LA VITESSE D'UN FLUIDE PAR ULTRASON**

VERFAHREN ZUR MESSUNG DER GESCHWINDIGKEIT EINES FLUIDS MITHILFE VON ULTRASCHALL

METHOD FOR MEASURING THE SPEED OF A FLUID BY ULTRASOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2019 FR 1907189**

(43) Date de publication de la demande:
**30.12.2020 Bulletin 2020/53**

(73) Titulaire: **Sagemcom Energy & Telecom SAS 92500 Rueil-Malmaison (FR)**

(72) Inventeur: **TEBOULLE, Henri 92500 Rueil Malmaison (FR)**

(74) Mandataire: **Lavaud, Thomas et al Cabinet Boettcher 16, rue Médéric 75017 Paris (FR)**

(56) Documents cités:
**WO-A1-2019/002145 US-A- 4 515 021**

**Description**

L'invention concerne le domaine des compteurs de fluide à ultrason.

ARRIERE PLAN DE L'INVENTION

Les documents WO2019/002145 et US4515021 font partie de l'état de l'art. Un compteur de fluide à ultrason utilise classiquement, pour mesurer le débit d'un fluide circulant dans un tuyau, un dispositif de mesure de la vitesse du fluide par émission et réception de signaux ultrasoniques de mesure.

Le dispositif de mesure comporte un conduit, raccordé au tuyau, dans lequel circule le fluide. Pour mesurer la vitesse du fluide, on émet dans le conduit des signaux ultrasoniques de mesure parcourant un trajet de longueur définie, on mesure les temps de trajet mis par les signaux ultrasoniques de mesure pour parcourir le trajet de longueur définie d'amont en aval et d'aval en amont, et on estime la vitesse du fluide à partir notamment de la longueur définie et de la différence entre les temps de trajet.

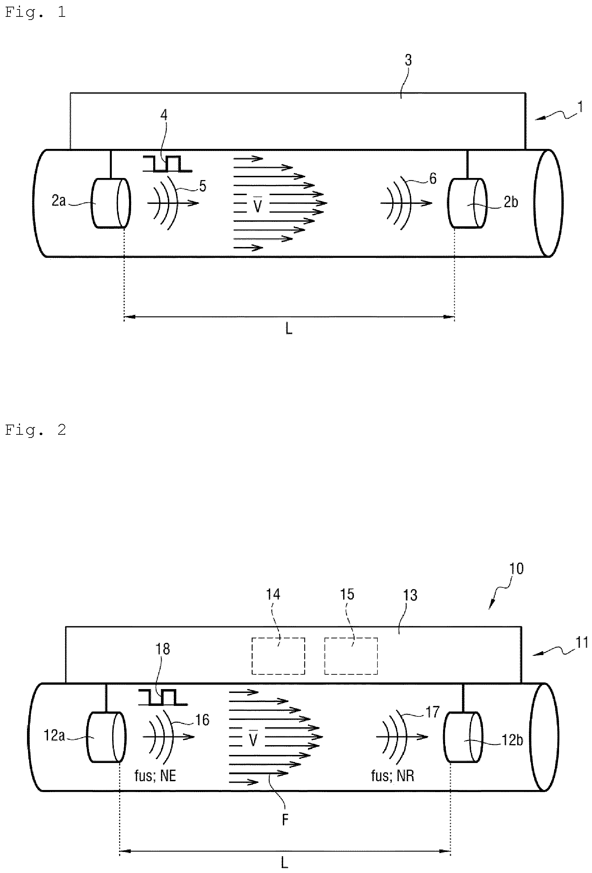

Un tel dispositif de mesure 1, parfois désigné par les termes anglais *classical pipe,* est visible sur la figure 1. Le dispositif de mesure 1 comporte un premier transducteur 2a, un deuxième transducteur 2b, et un module de mesure 3 relié au premier transducteur 2a et au deuxième transducteur 2b.

Le premier transducteur 2a et le deuxième transducteur 2b sont appairés en fréquence et en niveau d'émission. Le premier transducteur 2a et le deuxième transducteur 2b sont par exemple des transducteurs piézoélectriques.

Le trajet de longueur définie est donc ici un trajet rectiligne de longueur L entre le premier transducteur 2a et le deuxième transducteur 2b.

Le module de mesure 3 produit un signal électrique d'excitation 4 qui est appliqué en entrée du premier transducteur 2a.

Le premier transducteur 2a émet à partir du signal électrique d'excitation 4 un signal ultrasonique de mesure émis 5. Le deuxième transducteur 2b reçoit un signal ultrasonique de mesure reçu 6 résultant de la propagation dans le fluide du signal ultrasonique de mesure émis 5.

Le module de mesure 3 mesure le temps de trajet mis par le signal ultrasonique de mesure émis 5 pour parcourir le trajet de longueur définie d'amont en aval.

Le module de mesure 3 mesure en réalité un temps de transfert global $T_{AB}$ du premier transducteur 2a vers le deuxième transducteur 2b.

Le temps de transfert global $T_{AB}$ est tel que :

$$T_{AB} = TA_A + ToF_{AB} + TR_B,$$

où :

- $TA_A$ est un temps d'allumage du premier transducteur 2a ;
- $ToF_{AB}$ correspond au temps de vol (*Time of Flight,* en anglais) mis par le signal ultrasonique de mesure émis 5 pour parcourir le trajet de longueur définie entre le premier transducteur 2a et le deuxième transducteur 2b ;
- $TR_B$ est un temps de réception du deuxième transducteur 2b.

De même, le deuxième transducteur 2b émet un signal ultrasonique de mesure qui est reçu par le premier transducteur 2a.

Le module de mesure 3 mesure le temps de transfert global $T_{BA}$ qui est tel que :

$$T_{BA} = TA_B + ToF_{BA} + TR_A,$$

où :

- $TA_B$ est un temps d'allumage du deuxième transducteur 2b ;
- $ToF_{BA}$ correspond au temps de vol mis par le signal ultrasonique de mesure pour parcourir le trajet de longueur définie entre le deuxième transducteur 2b et le premier transducteur 2a ;
- $TR_A$ est un temps de réception du premier transducteur 2a.

En supposant que :
$TA_A = TA_B$ et $TR_A = TR_B$ (Transducteurs appairés), on obtient :

$$\Delta T = T_{BA} - T_{AB} = ToF_{BA} - ToF_{AB} = DToF,$$

où DToF est le temps de vol différentiel (*Differential Time of Flight*).

Or, le DToF est proportionnel à la vitesse moyenne $\overline{V}$ du fluide, et le module de mesure 3 calcule alors la vitesse moyenne $\overline{V}$ du fluide en utilisant la formule :

$$DToF = 2L.\overline{V}/(C^2 - \overline{V}^2),$$

où C est la vitesse d'une onde ultrasonique dans le fluide. Par exemple, la vitesse d'une onde ultrasonique dans l'eau est égale à environ 1500m/s, et dépend de la température de l'eau.

Le module de mesure 3 déduit alors de la vitesse moyenne $\overline{V}$, signée, le débit du fluide circulant dans le tuyau.

Certains phénomènes, dus à la fluidique dans le conduit traversé par le fluide, peuvent se traduire par des perturbations pouvant annihiler les mesures. Par exemple, des bulles d'air dans le fluide peuvent fausser une mesure, car la vitesse du son dans l'eau est de l'ordre de 1500m/s alors que la vitesse du son dans l'air est à peu près 4,4 fois plus faible (elle est égale à 340m/s). En l'absence de bulles d'air, d'autres perturbations, telles que des vortex, peuvent aussi générer du bruit et fausser les mesures.

Une méthode connue pour estimer le temps de vol consiste à définir l'enveloppe du signal ultrasonique de mesure reçu, à comparer cette enveloppe avec un seuil d'amplitude prédéfini, et à prendre en compte le temps où l'enveloppe atteint ledit seuil d'amplitude prédéfini. Cette méthode est simple à mettre en œuvre mais présente deux inconvénients majeurs.

La détermination du sommet de chaque lobe pseudosinusoïdal utilise une interpolation sinusoïdale sur les sommets des lobes. Or, l'interpolation sinusoïdale est, de manière générale, assez peu précise sur la détermination de l'instant du maximum (sommet) d'un lobe.

De plus, le principe même d'utiliser une comparaison avec un seuil pour déterminer un instant est imprécis. Or, dans certains cas, la précision requise sur la vitesse du fluide nécessite de déterminer un temps de vol avec une précision de l'ordre de la dizaine de ps.

OBJET DE L'INVENTION

L'invention a pour objet d'améliorer la précision des mesures de débit réalisées par un compteur de fluide à ultrason, et de réduire la consommation électrique dudit compteur.

RESUME DE L'INVENTION

En vue de la réalisation de ce but, on propose un procédé de mesure d'une vitesse d'un fluide, comprenant les étapes de :

- acquérir un signal ultrasonique de mesure après qu'il a parcouru dans le fluide un trajet de longueur définie ;
- définir une zone de mesure du signal ultrasonique de mesure, qui comprend une pluralité de lobes de mesure ;
- mesurer, pour chaque lobe de mesure, un temps de passage par zéro associé audit lobe de mesure ;
- sélectionner au moins deux temps de passage par zéro qui vérifient un critère de précision prédéfini ;
- estimer un temps de vol du signal ultrasonique de mesure à partir des temps de passage par zéro sélectionnés ;
- utiliser le temps de vol pour estimer la vitesse du fluide.

Le temps de vol du signal ultrasonique de mesure est donc estimé à partir des temps de passage par zéro sélectionnés qui vérifient le critère de précision prédéfini. On supprime donc les mesures de temps de passage par zéro aberrantes car perturbées par des bruits de toute nature, et on conserve uniquement les mesures de temps de passage par zéro non perturbées. On met ainsi en œuvre un filtrage non linéaire qui permet d'améliorer grandement la précision de la mesure.

Tous les signaux ultrasoniques de mesure acquis (ou presque) peuvent donc être utilisés, puisque l'on supprime les temps de passage par zéro imprécis et que l'on sélectionne uniquement les temps de passage par zéro précis. On extrait donc de chaque signal ultrasonique de mesure les échantillons de mesure précis et pertinents, et on élimine les autres, de sorte qu'il n'est pas nécessaire, pour exploiter un signal ultrasonique de mesure, que tous les échantillons de mesure soient parfaitement précis sur la totalité du signal ultrasonique de mesure.

Il n'est ainsi pas nécessaire d'émettre à de nombreuses reprises le signal ultrasonique de mesure pour obtenir des mesures précises. La sélection réalisée permet donc d'éviter de répéter inutilement l'émission du signal ultrasonique de mesure, ce qui permet de réduire la consommation électrique d'un compteur dans lequel le procédé de mesure selon l'invention est mis en œuvre.

On propose de plus un procédé de mesure tel que celui qui vient d'être décrit, dans lequel les temps de passage par zéro sélectionnés sont des temps de passage par zéro successifs qui sont associés à des lobes de mesure successifs.

On propose de plus un procédé de mesure tel que celui qui vient d'être décrit, dans lequel le critère de précision prédéfini utilise une valeur d'un rapport entre une différence entre deux temps de passage par zéro successifs, et entre une période d'un signal électrique d'excitation utilisé pour générer le signal ultrasonique de mesure.

On propose de plus un procédé de mesure tel que celui qui vient d'être décrit, dans lequel l'étape de sélection comprend les étapes de :

- pour k = 1 à N-1, calculer les valeurs $R_k$ qui sont définies par :

$$R_k = (t_{k+1} - t_k)/Tus,$$

les $t_k$ étant les temps de passage par zéro de la zone de mesure (21), et Tus étant la période du signal électrique d'excitation (18) ;

- lorsqu'un couple $C_i = (R_i , R_{i+1})$ est tel que :

$$R_i \in [(100-\alpha)\% ; (100+\alpha)\%] \text{ et } R_{i+1} \in [(100-\alpha)\% ; (100+\alpha)\%],$$

où $\alpha$ est un seuil de précision prédéfini,

sélectionner les temps de passage par zéro $t_i$, $t_{i+1}$ et $t_{i+2}$ .

On propose de plus un procédé de mesure tel que celui qui vient d'être décrit, dans lequel l'étape de sélection comprend en outre les étapes de :

- définir des variables $a_k$, k variant de 1 à N ;
- initialiser chaque variable $a_k$ à 0 ;
- donner la valeur 1 à chaque variable $a_i$ lorsque le temps de passage par zéro $t_i$ est sélectionné ;
- évaluer le temps de vol à partir de formule :

$$ToF_{AB} = \frac{1}{N_t} . \sum_{k=1}^{k=N} a_k . (t_k - (k-1).T_{us}),$$

Nt étant le nombre de temps de passage par zéro sélectionnés.

On propose de plus un procédé de mesure tel que celui qui vient d'être décrit, dans lequel le signal ultrasonique de mesure comprend successivement une zone préliminaire, la zone de mesure et une zone finale, la zone préliminaire et la zone finale n'étant pas prises en compte pour réaliser la mesure de la vitesse du fluide.

On propose de plus un compteur de fluide à ultrason comportant un premier transducteur, un deuxième transducteur, et un module de mesure relié au premier transducteur et au deuxième transducteur, le compteur de fluide à ultrason étant agencé pour mettre en œuvre le procédé de mesure qui vient d'être décrit.

On propose en outre un programme d'ordinateur comprenant des instructions pour mettre en œuvre, par un microcontrôleur d'un compteur de fluide à ultrason, le procédé de mesure qui vient d'être décrit.

On propose aussi des moyens de stockage, caractérisés en ce qu'ils stockent un programme d'ordinateur comprenant des instructions pour mettre en œuvre, par un microcontrôleur d'un compteur de fluide à ultrason, le procédé de mesure qui vient d'être décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

[Fig. 1] la figure 1 représente un compteur de fluide à ultrason de l'art antérieur ;

[Fig. 2] la figure 2 représente un compteur de fluide à ultrason dans lequel est mis en œuvre le procédé de mesure d'une vitesse d'un fluide selon l'invention ;

[Fig. 3] la figure 3 représente un signal ultrasonique de mesure après qu'il a parcouru dans le fluide un trajet de longueur prédéfini ;

[Fig. 4] la figure 4 représente des étapes du procédé de mesure d'une vitesse d'un fluide selon l'invention.

## DESCRIPTION DETAILLEE DE L'INVENTION

En référence à la figure 2, le procédé de mesure d'une vitesse d'un fluide selon l'invention est ici mis en œuvre dans un compteur d'eau à ultrason 10.

Le compteur d'eau à ultrason 10 comporte un conduit dans lequel circule de l'eau fournie par un réseau de distribution à une installation, ainsi qu'un dispositif de mesure de la vitesse de l'eau 11.

L'eau circule dans le conduit d'amont en aval, comme cela est indiqué par le sens des flèches F, mais pourrait tout aussi bien circuler d'aval en amont.

Le dispositif de mesure 11 comporte un premier transducteur 12a, un deuxième transducteur 12b, et un module de mesure 13 relié au premier transducteur 12a et au deuxième transducteur 12b.

Le premier transducteur 12a et le deuxième transducteur 12b sont appairés. Le premier transducteur 12a et le deuxième transducteur 12b sont ici des transducteurs piézoélectriques.

Le module de mesure 13 comporte un composant de traitement 14 adapté à exécuter des instructions d'un programme pour mettre en œuvre le procédé de mesure selon l'invention. Le composant de traitement 14 est en l'occurrence un microcontrôleur, mais pourrait être un composant différent, par exemple un circuit logique programmable de type ASIC (de l'anglais « Application Specific Integrated Circuit ») ou de type FPGA (de l'anglais « Field-Programmable Gate Array »).

Le module de mesure 13 comporte aussi un convertisseur analogique numérique 15 (éventuellement intégré dans le composant de traitement 14).

Le module de mesure 13 pilote le premier transducteur 12a et le deuxième transducteur 12b.

Le premier transducteur 12a et le deuxième transducteur 12b remplissent chacun successivement la fonction d'un émetteur de signaux ultrasoniques de mesure émis 16, et la fonction d'un récepteur de signaux ultrasoniques de mesure reçus 17.

Le module de mesure 13 génère un signal électrique d'excitation 18, et fournit à l'émetteur le signal électrique d'excitation 18.

L'émetteur transforme le signal électrique d'excitation 18 en un signal ultrasonique de mesure émis 16. Le module de mesure 13 acquiert le signal ultrasonique de mesure reçu 17 qui est reçu par le récepteur.

Le signal électrique d'excitation 18 a pour fréquence fus et pour période Tus. La fréquence fus est classiquement comprise entre 900kHz et 4MHz, et est ici (cas où le fluide est de l'eau) égale à 2MHz. Dans le cas où le fluide est un gaz, la fréquence fus est classiquement de l'ordre de quelques dizaines de KHz.

Le signal ultrasonique de mesure émis 16 parcourt ainsi, entre le premier transducteur 12a et le deuxième transducteur 12b, un trajet de longueur définie L d'amont en aval (puis d'aval en amont pour la mesure où c'est le transducteur 12b qui émet). Le trajet de longueur définie est ici un trajet rectiligne entre le premier transducteur 12a et le deuxième transducteur 12b.

Comme on l'a vu plus tôt, on peut déterminer la vitesse moyenne $\overline{V}$ du fluide en utilisant la formule :

DToF=2L.$\overline{V}$/(C$^2$-$\overline{V}^2$), où C est la vitesse d'une onde ultrasonique dans le fluide.

Or, C dépend de la température du fluide.

On montre que la vitesse $\overline{V}$ du fluide peut aussi s'exprimer via une formule qui élimine C, et donc qui ne nécessite pas de mesurer la température du fluide :

$$\overline{V} = 2L.\frac{DToF}{SumToF^2 - DToF^2}$$

où SumToF est la somme des temps de vol, qui s'obtient à partir des temps de vol ToF$_{AB}$ et ToF$_{BA}$.

On détermine donc les temps de vol ToF$_{AB}$ et ToF$_{BA}$ pour calculer le SumToF et le DToF.

Sur la figure 2, on a représenté le premier transducteur 12a remplissant la fonction d'un émetteur et le deuxième transducteur 12b remplissant la fonction d'un récepteur. Le signal électrique d'excitation 18 est donc appliqué en entrée du premier transducteur 12a pour émettre le signal ultrasonique de mesure émis 16. Le signal ultrasonique de mesure émis 16 parcourt donc le trajet de longueur définie L d'amont en aval. Le signal ultrasonique de mesure émis 16 est émis par l'émetteur avec un niveau NE. Le signal ultrasonique de mesure reçu 17 est reçu par le récepteur avec un niveau NR inférieur au niveau NE.

Le module de mesure 13 acquiert le signal ultrasonique de mesure reçu 17 après qu'il a parcouru dans l'eau le trajet de longueur définie. Le module de mesure 13 numérise le signal ultrasonique de mesure reçu 17 en utilisant le convertisseur analogique numérique 15, et produit des échantillons de mesure. Pour un signal de fréquence fus = 2MHz, la fréquence d'échantillonnage est typiquement de 8MHz afin de respecter le critère de Shannon.

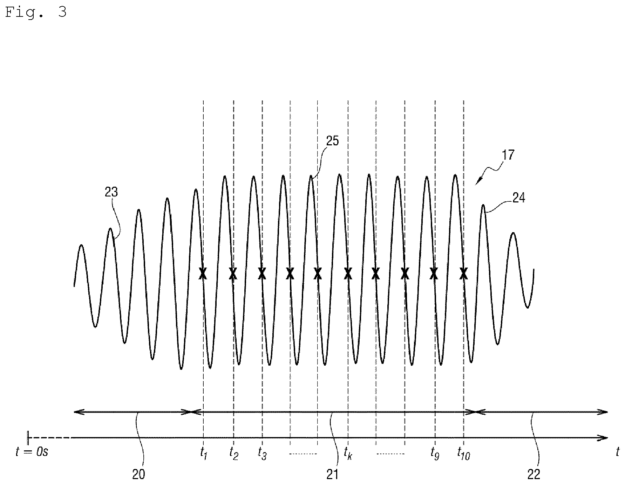

Le signal ultrasonique de mesure reçu 17 est visible sur la figure 3.

Le signal ultrasonique de mesure reçu 17 comprend successivement une zone préliminaire 20, une zone de mesure 21 et une zone finale 22.

La zone préliminaire 20 correspond à une zone dans laquelle la fréquence du signal ultrasonique de mesure émis 16 n'est pas encore égale précisément à la fréquence fus du signal électrique d'excitation 18. La fréquence du signal ultrasonique de mesure reçu 17 n'est donc pas encore précisément calée sur celle du signal électrique d'excitation 18, mais correspond plutôt à la fréquence de résonance du piézoélectrique. La zone préliminaire 20 comprend ici quatre lobes préliminaires 23. Ici, par « lobe », on entend une demi-période positive du signal ultrasonique de mesure reçu 17.

La zone finale 22 correspond à une portion du signal ultrasonique de mesure reçu 17 qui, préalablement à sa réception par le récepteur, est passée par des zones métalliques du compteur 10. La zone finale 22 correspond au phénomène appelé « multi-trajet ». Dans la zone finale 22, le signal ultrasonique de mesure reçu 17 est bruité par les multi-trajets. La zone finale 22 comprend ici deux lobes finaux 24.

Dans la zone de mesure 21, par contre, la fréquence du signal ultrasonique de mesure reçu 17 est bien égale à la fréquence fus. La zone de mesure 21 comprend dix lobes de mesure 25.

On ne tient pas compte de la zone préliminaire 20 et de la zone finale 22 afin d'améliorer la précision de la mesure de la vitesse du fluide.

On élimine donc les lobes préliminaires 23 et les lobes finaux 24.

On peut associer à chaque lobe de mesure 25 un temps de passage par zéro $t_k$. La zone de mesure 21 comprend N temps de passage par zéro qui sont appelés $t_k$, avec k = 1 à N. Ici, N=10.

Le temps de passage par zéro $t_k$ associé à un lobe de mesure 25 est le moment où le front descendant du lobe de mesure 25 passe par zéro.

On sélectionne les temps de passage par zéro de la zone de mesure 21, qui vérifient un critère de précision prédéfini. La sélection est réalisée de la manière qui suit.

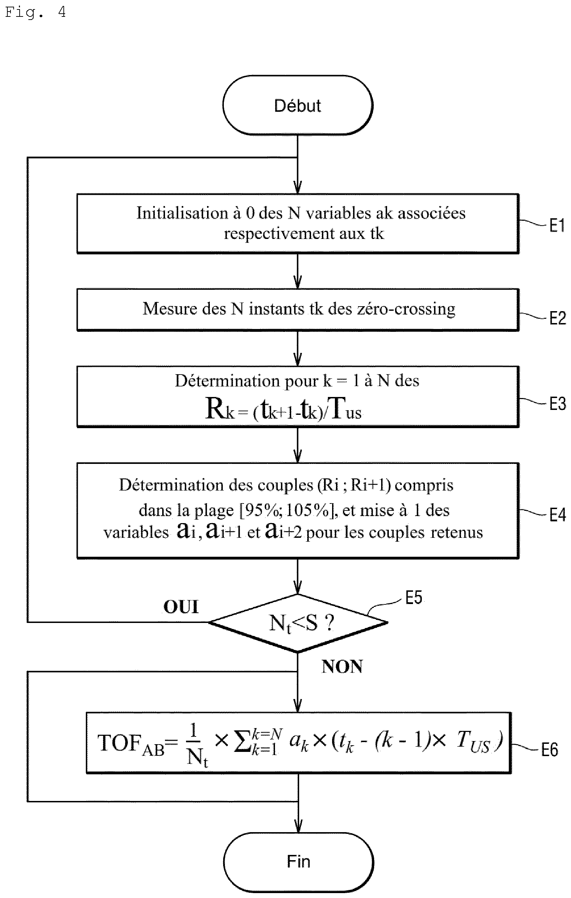

En référence à la figure 4, on définit N variables $a_k$, k variant de 1 à N. La valeur de chaque variable $a_k$ est initialisée à 0. Chaque variable $a_k$ est associée à un temps de passage par zéro $t_k$ (étape E1).

On mesure alors les N temps de passage par zéro. Les temps de passage par zéro sont mesurés par une méthode du type « *Zero Crossing* » qui utilise une interpolation sinusoïdale réalisée sur les échantillons de mesure de chaque lobe de mesure 25 (étape E2).

Puis, on sélectionne au moins deux temps de passage par zéro $t_i$, qui vérifient le critère de précision prédéfini. On définit ainsi, sur la base des temps de passage par zéro sélectionnés, des échantillons de mesure corrects, qui permettent d'obtenir une estimation de la vitesse du fluide suffisamment précise, grâce à l'élimination des mesures $t_k$ incorrectes.

Le critère de précision prédéfini utilise une valeur d'un rapport entre une différence entre deux temps de passage par zéro $t_k$ successifs, et entre la période Tus du signal électrique d'excitation 18 utilisé pour générer le signal ultrasonique de mesure émis 16.

Plus précisément, pour k variant de 1 à N-1, on calcule les valeurs $R_k$ qui sont définies par :

$$R_k = (t_{k+1} - t_k)/\text{Tus (étape E3)}.$$

On cherche alors, pour k variant de 1 à N-1, les couples $C_k = (R_k ; R_{k+1})$ qui sont tels que :
$R_k \in [(100-\alpha)\% ; (100+\alpha)\%]$ et $R_{k+1} \in [(100-\alpha)\% ; (100+\alpha)\%]$, où $\alpha$ est un seuil de précision prédéfini.

Ici, $\alpha=5\%$.

Le seuil de précision prédéfini $\alpha$ est programmable. On pourrait d'ailleurs avoir deux valeurs de seuil prédéfini différentes, une valeur pour définir la borne inférieure et l'autre pour définir la borne supérieure de l'intervalle de précision.

On commence donc par k=1, puis par k=2, ..., jusqu'à k=N-1, et on identifie tous les couples $C_i = (R_i, R_{i+1})$, qui sont tels tel que :
$R_i \in [95\% ; 105\%]$ et $R_{i+1} \in [95\% ; 105\%]$.

Pour chaque couple $C_i$ qui vérifie ces conditions, on sélectionne les temps de passage par zéro $t_i$, $t_{i+1}$ et $t_{i+2}$.

On met ensuite à 1 les variables $a_i$, $a_{i+1}$ et $a_{i+2}$ (étape E4).

On continue ainsi de suite jusqu'à ce que l'on ait sélectionné toutes les mesures de temps de passage par zéro $t_i$ correctes.

On obtient ainsi un nombre $N_t$ de temps de passage par zéro $t_i$ sélectionnés.

En variante de l'étape E4, on identifie tous les $R_i$ E [95% ; 105%], et pour chacun de ces $R_i$, on sélectionne les temps de passage par zéro $t_i$ et $t_{i+1}$ et on met ensuite à 1 les variables $a_i$ et $a_{i+1}$.

Puis, on compare le nombre $N_t$ avec un seuil de refus prédéterminé S (étape E5).

S est tel que :

$$1 < S \leq N.$$

Si $N_t < S$, cela signifie que l'ensemble des temps de passage par zéro $t_1$, ..., $t_N$ ne comporte pas assez de temps de passages par zéro suffisamment précis. Le critère de précision prédéfini n'est pas rempli. Les échantillons de mesure du signal ultrasonique de mesure reçu 17 ne permettent pas d'obtenir une estimation précise de la vitesse, par exemple parce que le signal ultrasonique de mesure a été perturbé en parcourant le trajet de longueur prédéfinie.

On recommence donc la mesure en retournant à l'étape E1.

Si $N_t \geq S$, le critère de précision prédéfini est rempli.

On détermine l'instant de mesure du temps de vol $ToF_{AB}$ en moyennant les $N_t$ temps de passage par zéro sélectionnés ramenés à l'instant t1. On obtient l'estimation du temps de vol $ToF_{AB}$ suivante :

$$ToF_{AB} = \frac{1}{N_t} \cdot \sum_{k=1}^{k=N} a_k \cdot (t_k - (k-1) \cdot T_{us}) \quad \text{(étape E6)}.$$

On a donc mis en œuvre un filtrage non linéaire et un filtrage linéaire. Le filtrage non linéaire correspond à la sélection des temps de passage par zéro : la sélection ne présente pas de linéarité dans le temps. Le filtrage linéaire est quant à lui réalisé par moyennage des temps de passage par zéro sélectionnés pour estimer le temps de vol $ToF_{AB}$.

On recommence alors les opérations qui viennent d'être décrites pour déterminer le temps de vol $ToF_{BA}$.

Le signal électrique d'excitation 18 est donc appliqué en entrée du deuxième transducteur 12b pour émettre le signal ultrasonique de mesure émis. Le signal ultrasonique de mesure émis parcourt donc le trajet de longueur définie L d'aval en amont. Le signal ultrasonique de mesure reçu est reçu par le premier transducteur 12a.

Le module de mesure 13 détermine le temps de vol $ToF_{BA}$ de la même manière qu'il a déterminé le temps de vol $ToF_{AB}$.

On calcule alors la somme des temps de vol totale SumToF_tot de la manière suivante :

$$\text{SumToF\_tot} = ToF_{AB} + ToF_{BA},$$

et la somme des temps de vol SumToF en soustrayant à la somme des temps de vol totale SumToF_tot les temps d'allumage $TA_A$, $TA_B$ et les temps de réception $TR_A$, $TR_B$ qui sont déterminés lors de la calibration du dispositif de mesure 11.

On peut aussi en déduire le temps de vol différentiel DToF en calculant la différence $ToF_{BA} - ToF_{AB}$.

On détermine ainsi la vitesse du fluide dans le tube.

Bien entendu, l'invention n'est pas limitée au mode de réalisation décrit mais englobe toute variante entrant dans le champ de l'invention telle que définie par les revendications.

L'invention s'applique bien sûr quels que soient le positionnement et la configuration du premier transducteur et du deuxième transducteur. Les signaux ultrasoniques de mesure peuvent être émis avec une orientation d'un angle quelconque par rapport à un axe longitudinal du conduit. Les signaux ultrasoniques de mesure peuvent être réfléchis par des réflecteurs, par exemple par des miroirs orientés à 45°.

Le fluide dont la vitesse et le débit sont mesurés n'est pas nécessairement de l'eau, mais pourrait être par exemple du pétrole, du gaz, etc.

**Revendications**

1. Procédé de mesure d'une vitesse d'un fluide, comprenant les étapes de :

   - acquérir un signal ultrasonique de mesure (17) après qu'il a parcouru dans le fluide un trajet de longueur définie ;

   le procédé étant **caractérisé en ce qu'**il comprend en outre les étapes suivantes:

- définir une zone de mesure (21) du signal ultrasonique de mesure, qui comprend une pluralité de lobes de mesure (25) ;
- mesurer, pour chaque lobe de mesure, un temps de passage par zéro ($t_k$) associé audit lobe de mesure ;
- sélectionner au moins deux temps de passage par zéro qui vérifient un critère de précision prédéfini ;
- estimer un temps de vol du signal ultrasonique de mesure à partir des temps de passage par zéro sélectionnés ;
- utiliser le temps de vol pour estimer la vitesse du fluide.

**2.** Procédé de mesure selon la revendication 1, dans lequel les temps de passage par zéro sélectionnés sont des temps de passage par zéro successifs qui sont associés à des lobes de mesure (25) successifs.

**3.** Procédé de mesure selon la revendication 2, dans lequel le critère de précision prédéfini utilise une valeur d'un rapport entre une différence entre deux temps de passage par zéro successifs, et entre une période (Tus) d'un signal électrique d'excitation (18) utilisé pour générer le signal ultrasonique de mesure (17).

**4.** Procédé de mesure selon la revendication 3, dans lequel l'étape de sélection comprend les étapes de :

- pour k = 1 à N-1, calculer les valeurs $R_k$ qui sont définies par :

$$R_k = (t_{k+1} - t_k) / \text{Tus},$$

les $t_k$ étant les temps de passage par zéro de la zone de mesure (21), et Tus étant la période du signal électrique d'excitation (18) ;
- lorsqu'un couple $C_i = (R_i, R_{i+1})$ est tel que :

$R_i \in [(100-\alpha)\% ; (100+\alpha)\%]$ et $R_{i+1} \in [(100-\alpha)\% ; (100+\alpha)\%]$, où $\alpha$ est un seuil de précision prédéfini, sélectionner les temps de passage par zéro $t_i$, $t_{i+1}$ et $t_{i+2}$.

**5.** Procédé de mesure selon la revendication 4, dans lequel l'étape de sélection comprend en outre les étapes de :

- définir des variables $a_k$, k variant de 1 à N ;
- initialiser chaque variable $a_k$ à 0 ;
- donner la valeur 1 à chaque variable $a_i$ lorsque le temps de passage par zéro $t_i$ est sélectionné ;
- évaluer le temps de vol à partir de formule :

$$ToF_{AB} = \frac{1}{N_t} . \sum_{k=1}^{k=N} a_k . (t_k - (k-1).T_{us}),$$

Nt étant le nombre de temps de passage par zéro sélectionnés.

**6.** Procédé de mesure selon l'une des revendications précédentes, dans lequel le signal ultrasonique de mesure (17) comprend successivement une zone préliminaire (20), la zone de mesure (21) et une zone finale (22), la zone préliminaire et la zone finale n'étant pas prises en compte pour réaliser la mesure de la vitesse du fluide.

**7.** Compteur de fluide à ultrason comportant un premier transducteur (12a), un deuxième transducteur (12b), et un module de mesure (13) relié au premier transducteur et au deuxième transducteur, le module de mesure étant agencé pour acquérir le signal ultrasonique de mesure reçu par le premier transducteur ou par le deuxième transducteur et le module de mesure comportant un composant de traitement (14) configuré pour mettre en œuvre le procédé de mesure selon l'une des revendications précédentes.

**8.** Programme d'ordinateur comprenant des instructions qui, lorsque le programme est exécuté par un microcontrôleur (14) d'un compteur de fluide à ultrason (10) selon la revendication 7, conduisent celui-ci à mettre en œuvre le procédé de mesure selon l'une des revendications 1 à 6.

**9.** Moyens de stockage stockant un programme d'ordinateur comprenant des instructions qui, lorsqu'elles sont exécutées par un microcontrôleur (14) d'un compteur de fluide à ultrason (10) selon la revendication 7 , conduisent celui-ci à mettre en œuvre le procédé de mesure selon l'une des revendications 1 à 6.

**Patentansprüche**

1. Messverfahren zum Messen einer Geschwindigkeit eines Fluids, umfassend die Schritte:

   - Erfassen eines Ultraschallmesssignals (17), nachdem es in dem Fluid einen Pfad definierter Länge zurückgelegt hat;

   wobei das Verfahren **dadurch gekennzeichnet ist, dass** es ferner die folgenden Schritte umfasst:

   - Definieren einer Messzone (21) des Ultraschallmesssignals, die eine Vielzahl von Messkeulen (25) umfasst;
   - Messen einer Nulldurchgangszeit ($t_k$), die mit der genannten Messkeule verbunden ist, für jede Messkeule;
   - Auswählen von mindestens zwei Nulldurchgangszeiten, die ein vordefiniertes Präzisionskriterium verifizieren;
   - Schätzen einer Laufzeit des Ultraschallmesssignals anhand der ausgewählten Nulldurchgangszeiten;
   - Verwenden der Laufzeit, um die Geschwindigkeit des Fluids zu schätzen.

2. Messverfahren nach Anspruch 1, bei dem die ausgewählten Nulldurchgangszeiten aufeinanderfolgende Nulldurchgangszeiten sind, die mit aufeinanderfolgenden Messkeulen (25) verbunden sind.

3. Messverfahren nach Anspruch 2, bei dem das vordefinierte Präzisionskriterium einen Wert für ein Verhältnis zwischen einer Differenz zwischen zwei aufeinanderfolgenden Nulldurchgangszeiten und zwischen einer Periode (Tus) eines elektrischen Anregungssignals (18) verwendet, das zum Erzeugen des Ultraschallmesssignals (17) verwendet wird.

4. Messverfahren nach Anspruch 3, bei dem der Auswahlschritt die Schritte umfasst:

   - für k = 1 bis N-1, Berechnen der Werte $R_k$, die definiert sind durch:

$$R_k = (t_{k+1} - t_k) \, / \, Tus,$$

   wobei $t_k$ die Nulldurchgangszeiten der Messzone (21) sind und Tus die Periode des elektrischen Anregungssignals (18) ist;
   - wenn ein Paar $C_i = (R_i, R_{i+1})$ derart ist, dass:

   $R_i \in [(100-\alpha)\% \, ; \, (100+\alpha)\%]$ und $R_{i+1} \in [(100-\alpha)\% \, ; \, (100+\alpha)\%]$,
   wobei $\alpha$ ein vordefinierter Präzisionsschwellenwert ist,
   Auswählen der Nulldurchgangszeiten $t_i$, $t_{i+1}$ und $t_{i+2}$.

5. Messverfahren nach Anspruch 4, bei dem der Auswahlschritt ferner die Schritte umfasst:

   - Definieren von Variablen $a_k$, wobei k von 1 bis N variiert;
   - Initialisieren jeder Variablen $a_k$ auf Null;
   - Zuweisen des Wertes 1 für jede Variable $a_i$, wenn die Nulldurchgangszeit $t_i$ ausgewählt wird;
   - Evaluieren der Laufzeit anhand der Formel:

$$ToF_{AB} = \frac{1}{N_t} \cdot \sum_{k=1}^{k=N} a_k \cdot (t_k - (k-1) \cdot T_{us}) \, ,$$

   wobei $N_t$ die Anzahl der ausgewählten Nulldurchgangszeiten ist.

6. Messverfahren nach einem der vorhergehenden Ansprüche, bei dem das Ultraschallmesssignal (17) nacheinander eine Vorzone (20), die Messzone (21) und eine Endzone (22) umfasst, wobei die Vorzone und die Endzone nicht berücksichtigt werden, um die Messung der Geschwindigkeit des Fluids durchzuführen.

7. Ultraschallfluidzähler, umfassend einen ersten Wandler (12a), einen zweiten Wandler (12b) und ein Messmodul (13), das mit dem ersten Wandler und dem zweiten Wandler verbunden ist, wobei das Messmodul ausgebildet ist, um das von dem ersten Wandler oder von dem zweiten Wandler empfangene Ultraschallmesssignal zu erfassen, und wobei das Messmodul eine Verarbeitungskomponente (14) umfasst, die konfiguriert ist, um das Messverfahren nach einem der vorhergehenden Ansprüche durchzuführen.

8. Computerprogramm, umfassend Anweisungen, die, wenn das Programm von einem Mikrocontroller (14) eines Ultraschallfluidzählers (10) nach Anspruch 7 ausgeführt wird, diesen Mikrocontroller veranlassen, das Messverfahren nach einem der Ansprüche 1 bis 6 durchzuführen.

9. Speichermittel, die ein Computerprogramm speichern, das Anweisungen umfasst, die, wenn sie von einem Mikrocontroller (14) eines Ultraschallfluidzählers (10) nach Anspruch 7 ausgeführt werden, diesen Mikrocontroller veranlassen, das Messverfahren nach einem der Ansprüche 1 bis 6 durchzuführen.

**Claims**

1. A method for measuring a velocity of a fluid, comprising the steps of:

   - acquiring an ultrasonic measuring signal (17) after it has travelled in the fluid over a path of defined length;

   the measuring method being **characterized in that** it further comprises the steps of:

   - defining measurement zone (21) of the ultrasonic measuring signal which includes a plurality of measurement lobes (25);
   - for each measurement lobe, measuring a zero crossing point ($t_k$) associated with said measurement lobe;
   - selecting at least two zero crossing points which satisfy a predefined precision criterion;
   - estimating a time of flight for the ultrasonic measuring signal from the selected zero crossing points;
   - utilizing the time of flight to estimate the velocity of the fluid.

2. The measuring method as claimed in claim 1, wherein the selected zero crossing points are successive zero crossing points which are associated with successive measurement lobes (25).

3. The measuring method as claimed in claim 2, wherein the predefined precision criterion utilizes a value for a ratio between a difference between two successive zero crossing points and between a period (Tus) of an electrical excitation signal (18) used to generate the ultrasonic measuring signal (17).

4. The measuring method as claimed in claim 3, wherein the selection step comprises the steps of:

   - for k = 1 to N-1, calculating the values $R_k$ which are defined by:

$$R_k = (t_{k+1} - t_k)/Tus,$$

   $t_k$ being the zero crossing points for the measurement zone (21), and Tus being the period of the electrical excitation signal (18);
   - when a pair $C_i = (R_i , R_{i+1})$ is such that:

   $R_i \in [(100-\alpha)\%; (100+\alpha)\%]$ and $R_{i+1} \in [(100-\alpha)\%; (100+\alpha)\%]$,
   in which $\alpha$ is a predefined precision threshold,
   selecting the zero crossing points $t_i$, $t_{i+1}$ and $t_{i+2}$.

5. The measuring method as claimed in claim 4, wherein the selection step further comprises the steps of:

   - defining variables $a_k$, k varying from 1 to N;
   - initializing each variable $a_k$ to 0;
   - giving the value 1 to each variable $a_i$ when the zero crossing point $t_i$ is selected;
   - evaluating the time of flight from the formula:

$$ToF_{AB} = \frac{1}{N_t} \cdot \sum_{k=1}^{k=N} a_k \cdot (t_k - (k-1).T_{us}),$$

$N_t$ being the number of selected zero crossing points.

6. The measuring method as claimed in one of the preceding claims, in which the ultrasonic measuring signal (17) comprises, in succession, a preliminary zone (20), the measurement zone (21) and a final zone (22), the preliminary zone and the final zone not being taken into account in order to carry out the measurement of the velocity of the fluid.

7. An ultrasonic flow meter which comprises a first transducer (12a), a second transducer (12b) and a measuring module (13) connected to the first transducer and to the second transducer, the measuring module being configured to acquire the ultrasonic measuring signal received by the first transducer or by the second transducer and the measuring module comprising a processing component (14) configured to carry out the measuring method as claimed in one of the preceding claims.

8. A computer program comprising instructions which, when the program is executed by a microcontroller (14) of an ultrasonic flow meter (10) as claimed in claim 7, cause said microcontroller to carry out the measuring method as claimed in one of claims 1 to 6.

9. Storage means storing a computer program which comprises instructions which, when executed by a microcontroller (14) of an ultrasonic flow meter (10) as claimed in claim 7, cause said microcontroller to carry out the measuring method as claimed in one of claims 1 to 6.

Fig. 1

Fig. 2

Fig. 3

Fig. 4

```
                    ┌──────────┐
                    │  Début   │
                    └────┬─────┘
                         │
                         ▼
      ┌──────────────────────────────────────────┐
      │ Initialisation à 0 des N variables ak     │
      │    associées respectivement aux tk        │──── E1
      └──────────────────┬───────────────────────┘
                         │
                         ▼
      ┌──────────────────────────────────────────┐
      │ Mesure des N instants tk des zéro-crossing│──── E2
      └──────────────────┬───────────────────────┘
                         │
                         ▼
      ┌──────────────────────────────────────────┐
      │ Détermination pour k = 1 à N des          │──── E3
      │      Rk = (tk+1-tk)/Tus                    │
      └──────────────────┬───────────────────────┘
                         │
                         ▼
      ┌──────────────────────────────────────────┐
      │ Détermination des couples (Ri ; Ri+1)     │
      │ compris dans la plage [95%;105%], et mise │──── E4
      │ à 1 des variables ai, ai+1 et ai+2 pour   │
      │ les couples retenus                       │
      └──────────────────┬───────────────────────┘
                         │
              OUI        ▼
         ◄───────────◄ Nt<S ? ►──── E5
                         │ NON
                         ▼
```

$$\text{Détermination pour } k = 1 \text{ à } N \text{ des } R_k = (t_{k+1}-t_k)/T_{us}$$

$$\text{Détermination des couples } (R_i ; R_{i+1}) \text{ compris dans la plage } [95\%; 105\%], \text{ et mise à 1 des variables } a_i, a_{i+1} \text{ et } a_{i+2} \text{ pour les couples retenus}$$

$$N_t < S ?$$

$$\text{TOF}_{AB} = \frac{1}{N_t} \times \sum_{k=1}^{k=N} a_k \times (t_k - (k-1) \times T_{US})$$

E6

Fin

## RÉFÉRENCES CITÉES DANS LA DESCRIPTION

**Documents brevets cités dans la description**

- WO 2019002145 A
- US 4515021 A